# DEMANDE DE BREVET EUROPEEN

(11) **EP 4 640 655 A1**
(43) Date de publication de la demande: **29.10.2025**
(21) Numéro de dépôt: 24171992.1
(22) Date de dépôt: 23.04.2024
(51) Int. Cl.: C04B 41/00, C04B 41/50, C04B 41/52, C04B 41/89, C23D 5/06, G04B 45/00, C04B 111/00, C04B 111/80

(54) **ARTICLE AVEC UN DÉCOR EN ÉMAIL PLIQUE-À-JOUR RÉTROÉCLAIRÉ ET SON PROCÉDÉ DE FABRICATION**

(71) Demandeur: Comadur S.A., 2400 Le Locle (CH)
(72) Inventeur: ROMAND, Johan, 25620 Mamirolle (FR)
(74) Mandataire: ICB SA

(57) **Abrégé**

L'invention concerne un procédé de fabrication d'un article (1) comprenant un décor débouchant (2) formant un émail dit plique-à-jour rétroéclairé, le procédé comprenant les étapes de :
- Mise à disposition d'une ébauche (5) ;
- Ablation d'une partie de l'ébauche (5) au niveau de la face intérieure (5b) de l'ébauche (5) pour réaliser un décor qui est non débouchant (2a) sur la face extérieure (5a) ;
- Dépôt depuis la face intérieure (5b) d'une ou plusieurs couches d'émail (3) au sein du décor non débouchant (2a) ;
- Dépôt depuis la face intérieure (5b) d'une couche de matière luminescente (4) sur l'émail (3) ;
- Dépôt d'une couche de protection (6) sur la couche de matière luminescente (4) ;
- Usinage de la face extérieure (5a) pour révéler l'émail (3).

Elle concerne également l'article (1) comprenant un décor débouchant (2) en émail plique-à-jour rétroéclairé.

## Description

### Domaine technique de l'invention

L'invention concerne un procédé de fabrication d'un article avec un décor en émail plique-à-jour rétroéclairé. Le procédé selon l'invention permet de réaliser des grandes séries pour un coût réduit. L'invention se rapporte également à l'article issu de ce procédé.

### Arrière-plan technologique

Le plique-à-jour est une technique de mise en oeuvre de l'émail sur un substrat sans fond au niveau de l'émail. L'absence de fond permet à la lumière de filtrer à travers l'émail transparent ou translucide. L'effet rendu est ainsi celui d'un vitrail miniature.

La technique de dépose traditionnelle du plique-à-jour consiste à créer des cloisons soudées avec un métal qui reste stable lors de la cuisson de l'émail. Lors des cuissons successives des couches déposées une à une, les cloisons métalliques, principalement en or jaune ou blanc pour leurs propriétés, peuvent se déformer, voire se désolidariser du substrat, ce qui limite grandement le nombre de passages au four et les designs réalisables.

En outre, un substrat est nécessaire lors de la dépose et de la cuisson pour que l'émail ne coule pas en dehors de sa cloison. Les substrats étant en quartz, il est très difficile de réaliser cette opération sur des formes non planes. Par ailleurs, l'émail traditionnel est déposé à la main, au pinceau ou avec un pique-huile. Les couches déposées par ces moyens sont très fines, ce qui nécessite de déposer des dizaines de couches pour arriver à une épaisseur totale qui est généralement inférieure à 0.5 mm. L'émail ainsi obtenu de, par sa faible épaisseur, est assez fragile.

Cette technique étant fastidieuse et peu reproductible, les pièces horlogères avec un cadran plique-à-jour sont des pièces uniques ou réalisées dans des séries ultra limitées avec un coût exorbitant. A ce jour, ce manque de répétabilité empêche les marques horlogères de produire des pièces en série.

Outre cet aspect productivité, un effet luminescent pour les décors, en particulier pour les indices d'une lunette ou d'un cadran, peut être recherché.

### Résumé de l'invention

La présente invention vise à pallier les manquements précités en proposant un procédé de fabrication permettant de réaliser des pièces avec un décor en émail plique-à-jour en grande série pour un coût restreint et avec une robustesse de l'émail accrue. La présente invention vise également à donner un effet luminescent à ce décor en émail plique-à-jour.

A cet effet, il est proposé un procédé de fabrication d'un article comprenant un décor débouchant rempli avec au moins un émail et une matière luminescente pour former un émail dit plique-à-jour rétroéclairé, le procédé comprenant les étapes de :
- Mise à disposition d'une ébauche définie avec une face extérieure qui est la face destinée à être tournée vers un observateur, et avec une face intérieure qui est une face opposée à la face extérieure ;
- Ablation d'une partie de l'ébauche au niveau de la face intérieure pour réaliser un décor qui est non débouchant sur la face extérieure ou, en alternative, à l'étape précédente, mise à disposition de ladite ébauche directement munie du décor non débouchant ;
- Dépôt depuis la face intérieure d'une ou plusieurs couches d'émail au sein du décor non débouchant et cuisson de l'émail après chaque dépôt de couche ;
- Dépôt depuis la face intérieure d'une couche de matière luminescente sur l'émail ;
- Dépôt depuis la face intérieure d'une couche de protection sur la couche de matière luminescente ;
- Usinage, de préférence par meulage, de la face extérieure pour révéler l'émail et ainsi réaliser l'article avec le décor débouchant.

De préférence, le décor débouchant est ensuite poli.

Ce procédé est très reproductible et permet des grands volumes de production pour des coûts très limités.

Ce procédé permet de déposer des couches épaisses d'émail, ce qui permet d'obtenir un émail avec une épaisseur totale supérieure ou égale à 0.5 mm avec un nombre limité de couches, typiquement inférieur à 10. Cette épaisseur plus importante de l'émail par rapport à celle des émaux de l'art antérieur permet de réduire sa fragilité, et par là-même de réaliser des composants d'habillage extérieur, tels que des lunettes, qui sont soumis à de fortes sollicitations.

De manière plus générale, l'utilisation de l'émail plutôt que de laques permet d'avoir une excellente résistance chimique et mécanique contrairement aux lunettes laquées standards. L'émail fait aussi partie des matières considérées comme nobles dans l'horlogerie et la joaillerie contrairement aux laques.

La polymérisation de la matière luminescente et de la couche de protection lors des étapes de dépôt s'effectue à des températures très faibles, typiquement de l'ordre de 80°C, qui ne viennent pas dégrader l'émail. La couche de protection qui est généralement de la laque permet de protéger la matière luminescente de l'environnement extérieur mais aussi de renvoyer la luminescence vers le côté émaillé. L'émail côté extérieur permet quant à lui de protéger le décor en matière luminescente de l'usure mécanique.

L'invention repose aussi sur la capacité à venir meuler le substrat et l'émail en même temps tout en garantissant un état de surface optimal sur les deux matériaux. Le polissage de l'émail permet aussi de ne pas repasser la pièce au four pour lui donner son aspect brillant et translucide final.

Le décor en émail transparent va créer une profondeur qu'il n'est aujourd'hui pas possible d'obtenir. De plus, la matière luminescente étant largement en retrait, l'effet luminescent sera perceptible même dans les milieux éclairés. Il est en outre possible de combiner les couleurs de la matière luminescente et les couleurs d'émail translucide pour obtenir des nouveaux panels de couleurs luminescentes. Il est également possible de déposer des couleurs dégradées dans l'émail, par exemple, par sprayage.

### Brève description des figures

Les figures 1a à 1f représentent les 6 étapes du procédé selon l'invention. Pour chaque figure, une vue schématique en coupe d'une partie de l'article ou de l'ébauche et une vue tridimensionnelle d'une partie de l'article ou de l'ébauche sont représentées. Les vues tridimensionnelles des figures 1a et 1f sont des vues depuis le dessus de l'ébauche ou de l'article respectivement, c.à.d. depuis la face extérieure, tandis que les vues 1b à 1e sont des vues depuis le dessous de l'ébauche, c.à.d. depuis la face intérieure.
Les figures 2a à 2c représentent avec des vues schématiques en coupe de l'article des étapes additionnelles et optionnelles du procédé selon l'invention.
La figure 3 est une vue tridimensionnelle de l'article issu du procédé.

### Description détaillée de l'invention

L'invention concerne un procédé de fabrication d'un article avec un décor en émail plique-à-jour rétroéclairé. L'article peut, à titre d'exemple, être un composant horloger. Il peut plus spécifiquement s'agir d'un composant d'habillage choisi parmi la liste non exhaustive comprenant une carrure, un fond, une lunette, une couronne, un poussoir, un maillon de bracelet, un bracelet, une boucle ardillon, un fermoir, un cadran et une aiguille. Il peut également s'agir d'un composant du mouvement tel qu'une masse oscillante. Le procédé est particulièrement bien adapté pour réaliser des articles soumis à de fortes sollicitations tels qu'un composant d'habillage extérieur. Ci-après, l'invention sera plus spécifiquement décrite pour une lunette.

Le procédé de fabrication est adapté pour tout substrat ayant un point de fusion plus élevé que celui de la température de cuisson de l'émail qui est typiquement comprise entre 650°C et 1 100°C selon la composition de l'émail. Le procédé est particulièrement bien adapté pour un substrat en matériau dur comme de la céramique telle que du nitrure de silicium, de l'oxyde de zirconium ou de l'oxyde d'aluminium, comme un saphir ou encore comme un cermet. Certains céramiques, particulièrement le ZrO₂, ont une excellente adhérence mécano-chimique avec l'émail, et leurs coefficients de dilatation sont très proches, ainsi l'article ajouré conserve une excellente résistance mécanique. Ces matériaux supportent bien les cycles de cuisson pouvant aller jusqu'à plus de 1000°C, pour de l'émail grand feu par exemple, et résistent aux chocs thermiques pour effectuer des cycles de cuisson rapides.

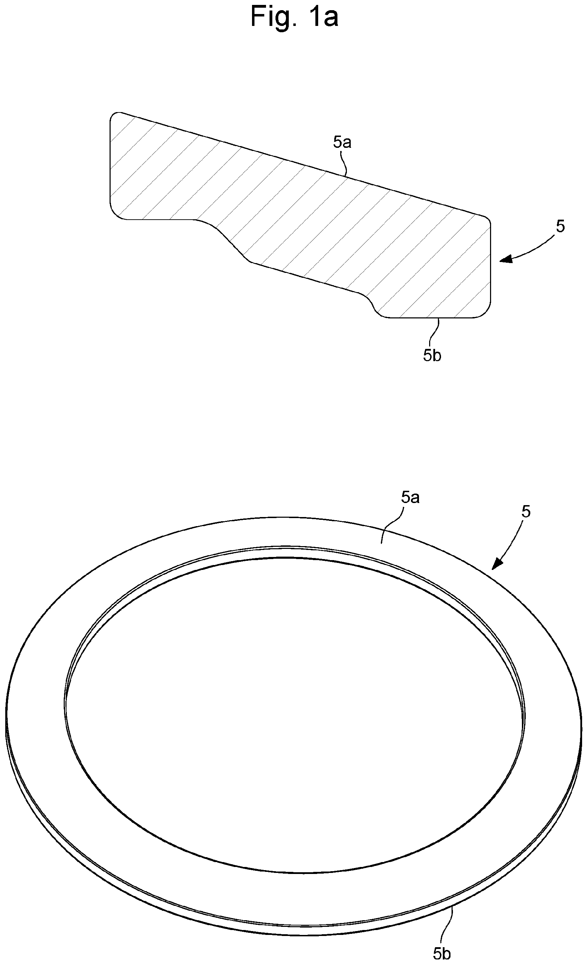

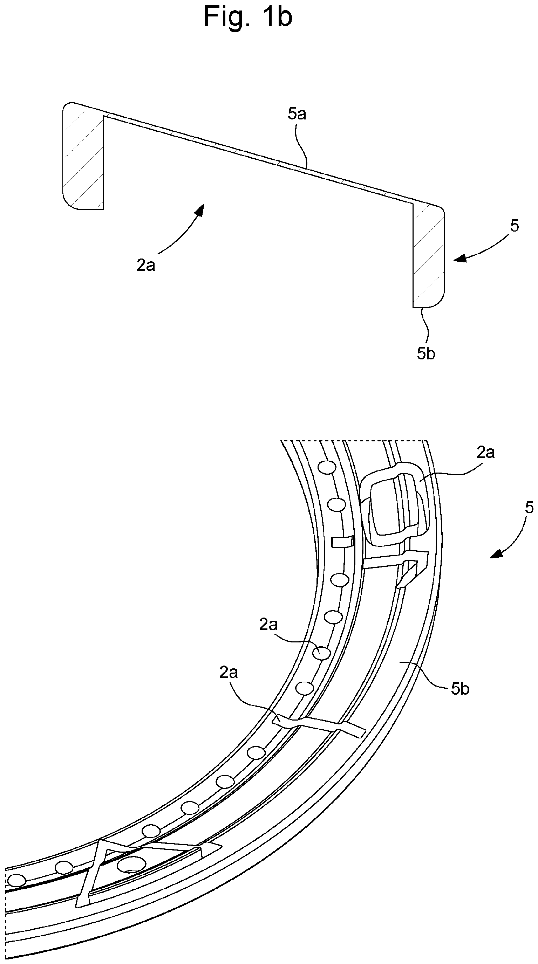

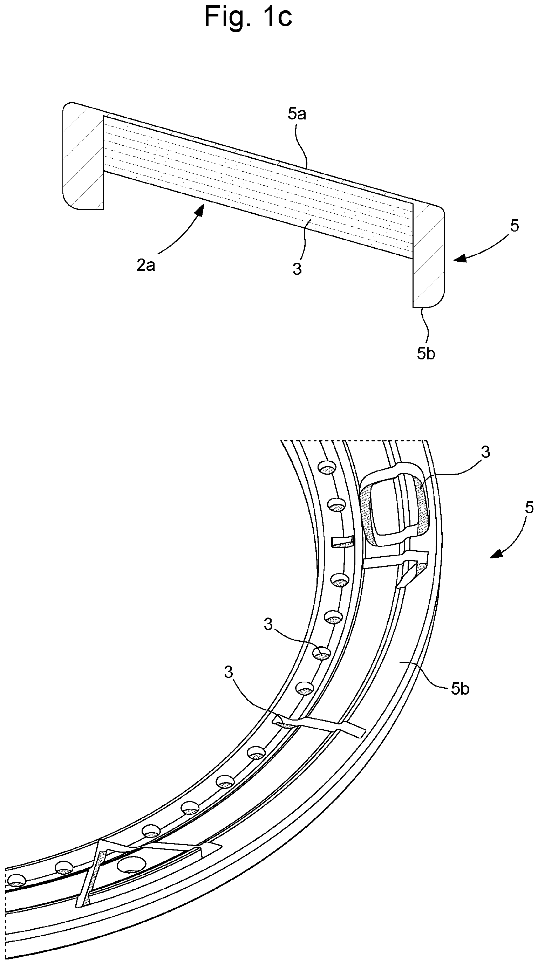

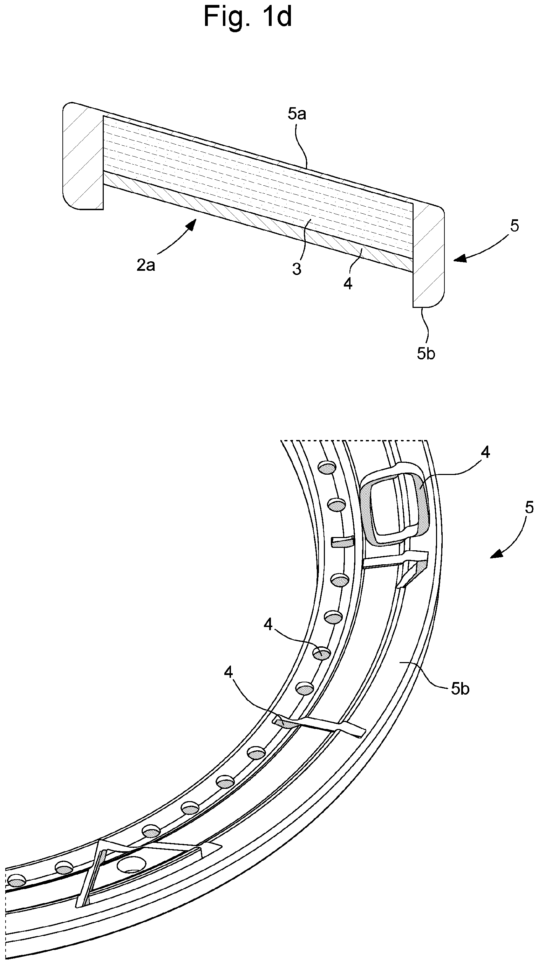

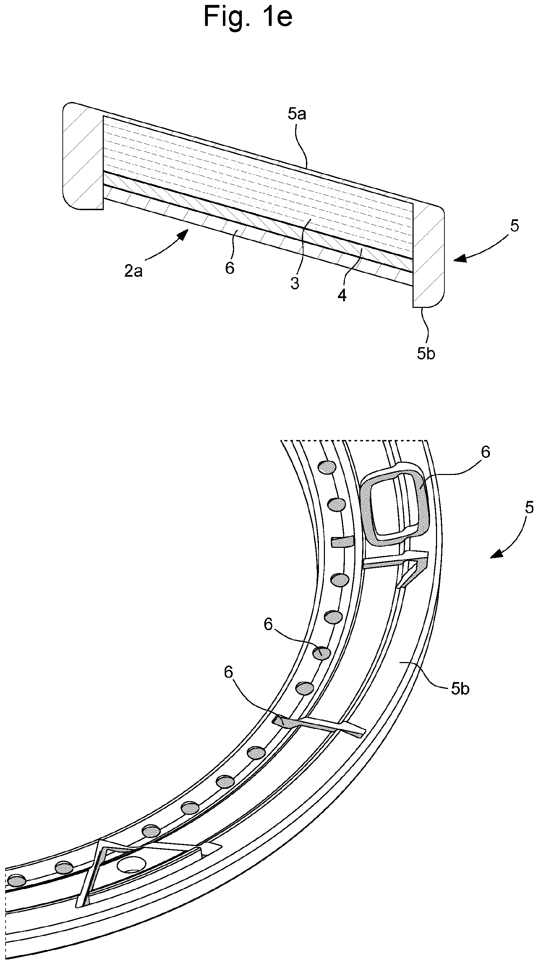

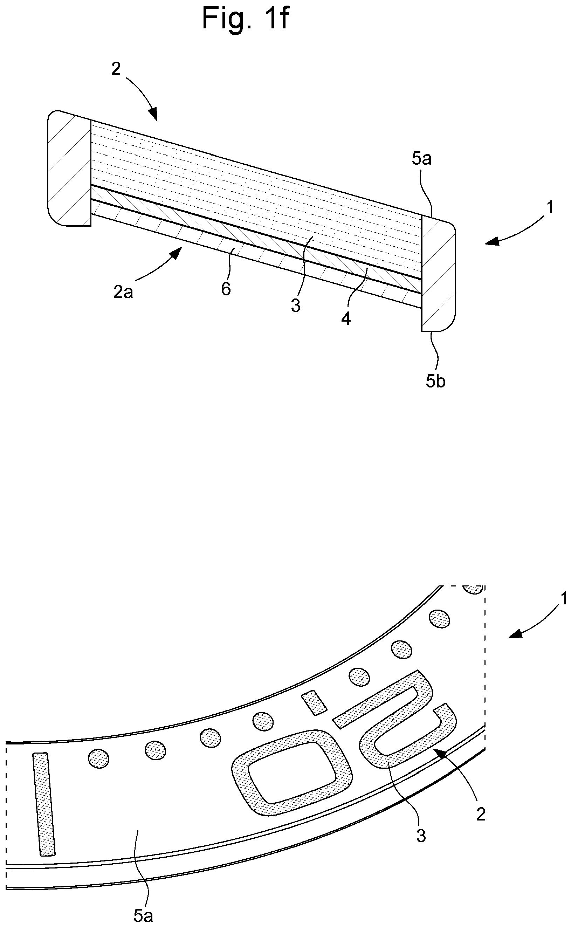

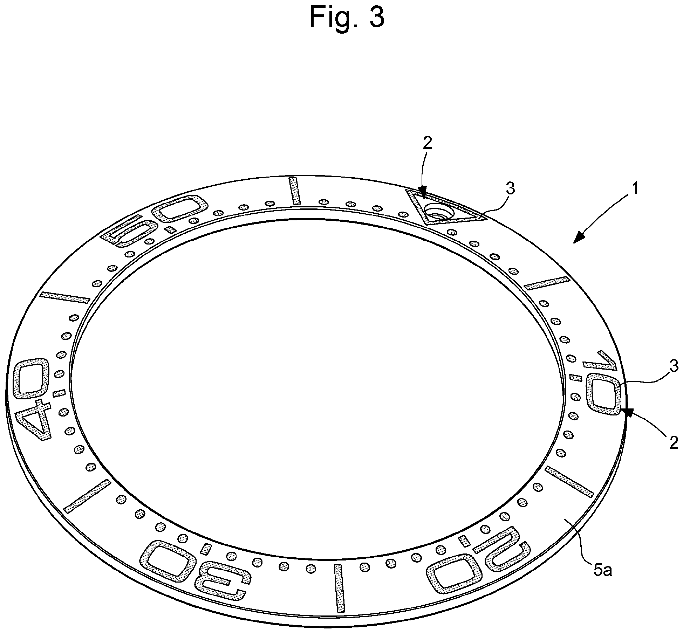

Le procédé est illustré aux figures 1a à 1f en 6 étapes de a) à f), pour une lunette. Dans une première étape a), l'article sans décor, qu'on qualifiera d'ébauche 5, est mis à disposition. Ensuite, dans une deuxième étape b), un décor non débouchant 2a est réalisé depuis la face intérieure 5b de l'ébauche 5. Le décor non débouchant peut, par exemple, être réalisé par ablation laser. Eventuellement, cette étape b) peut être omise avec dans l'étape a) une ébauche munie du décor non débouchant 2a mise directement à disposition, cette ébauche étant, par exemple, réalisée par injection. Dans une troisième étape c), l'émail 3 est déposé au sein du décor 2a toujours par l'intérieur de l'ébauche 5. Bien que non illustré à la figure 1c, lors de cette étape, la face intérieure 5b est préférentiellement placée en position supérieure pour permettre le dépôt de l'émail. Idéalement, le dépôt est réalisé par sprayage liquide en vue d'une réalisation industrielle. En variante, il peut s'agir d'une dépose manuelle rapide au pinceau ou d'une dépose par saupoudrage d'une poudre. L'ébauche 5 est ensuite cuite pour vitrifier l'émail déposé. Préférablement, plusieurs couches d'émail sont déposées avec, après chaque étape de dépôt, un cycle de cuisson de manière à garantir l'absence de bulles dans l'émail. Il est envisageable de déposer des couches d'émail de couleurs différentes et/ou de faire varier la couleur de l'émail déposé pour chaque couche. Typiquement, l'épaisseur totale des couches d'émail est supérieure ou égale à 0,5 mm, de préférence supérieure ou égale à 0.8 mm, l'épaisseur totale maximale pouvant atteindre une valeur de 1.5 mm, voire plus selon les temps de production. Dans une quatrième étape d), une fois le décor au moins partiellement rempli d'émail et cuit, une couche de matière luminescente 4 est déposée sur l'émail 3, c.à.d. toujours depuis l'intérieur de l'ébauche avec toujours préférentiellement la face intérieure en position supérieure. Par exemple, il peut s'agir comme matière luminescente de la matière Super-LumiNova^{®} qui est un pigment phosphorescent chargé dans une laque ou une colle. Cette matière offre un large panel de couleurs d'émission avec du bleu, du vert, du violet, du blanc, du jaune, de l'orange, du rose, etc. Dans une cinquième étape e), une couche de protection 6, qui est, par exemple une laque, est déposée sur la couche de matière luminescente 4, avec toujours préférentiellement la face intérieure en position supérieure. Il y a ensuite une sixième étape f) d'usinage, de préférence par meulage, de la face supérieure 5a de l'ébauche 5 pour révéler l'émail 3. On obtient ainsi le décor débouchant 2 rétroéclairé depuis l'intérieur par la matière luminescente 4. Ensuite, il peut y avoir un polissage final pour rendre la surface meulée parfaitement brillante et garantir la bonne transparence de l'émail. La lunette ainsi obtenue est représentée à la figure 3.

Optionnellement, la face extérieure peut être soumise à des traitements de finition tels que du satinage ou encore une texturation laser comme décrit ci-après. De même, une texturation de l'émail peut être réalisée sur la face intérieure ou au sein de l'émail.

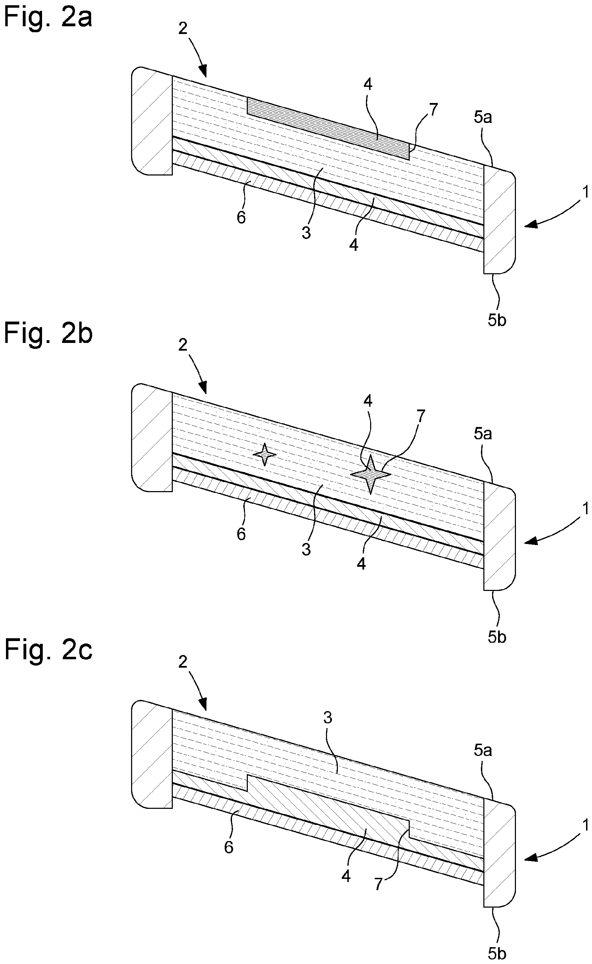

Les étapes optionnelles de texturation sont illustrées aux figures 2a à 2c. Ces étapes consistent à texturer l'émail 3, par exemple par gravage laser, pour réaliser une structure 7. Cette structure peut être maintenue comme telle pour donner un effet esthétique particulier ou être ensuite remplie avec de la matière, par exemple, de la matière luminescente 4. A la figure 2a, l'émail 3 est texturé après l'étape d'usinage au niveau de la face visible et de la matière luminescente 4 est ajoutée dans la structure 7. A la figure 2b, la structure 7 est réalisée au sein de l'émail 3. A la figure 2c, la réalisation de la structure 7 s'effectue sur la dernière couche déposée d'émail 3 sous l'ébauche avant le dépôt de la couche de matière luminescente 4.

L'article 1 obtenu présente les caractéristiques suivantes. Il est pourvu d'au moins un décor débouchant 2 rempli avec un empilement de couches qui sont depuis la face extérieure : une couche d'émail 3 issue du dépôt et de la cuisson d'une ou plusieurs couches d'émail, une couche de matière luminescente 4 et une couche de protection 6. Le nombre de couches d'émail déposées est typiquement compris entre 2 et 15, de préférence entre 3 et 10, et l'épaisseur totale de l'émail obtenu est typiquement supérieure ou égale à 0.5 mm, de préférence supérieure ou égale à 0.8 mm avec une valeur maximale pouvant atteindre 1.5 mm, voire plus pour des temps de production plus longs.

Optionnellement, se référant aux étapes additionnelles des figures 2a à 2c, l'article 1 comporte en surface ou dans la couche d'émail 3 une ou plusieurs structures 7 pouvant être remplies d'une matière, et plus spécifiquement d'une matière luminescente 4. Ces structures peuvent être disposées au niveau de la surface visible, en regard de la surface intérieure opposée à la surface visible ou entre les deux.

## Revendications

1. Procédé de fabrication d'un article (1) comprenant un décor débouchant (2) rempli avec au moins un émail (3) et une matière luminescente (4) pour former un émail dit plique-à-jour rétroéclairé, le procédé comprenant les étapes de :
- Mise à disposition d'une ébauche (5) définie avec une face extérieure (5a) qui est la face destinée à être tournée vers un observateur, et avec une face intérieure (5b) qui est une face opposée à la face extérieure (5a) ;
- Ablation d'une partie de l'ébauche (5) au niveau de la face intérieure (5b) pour réaliser un décor qui est non débouchant (2a) sur la face extérieure (5a) ou, en alternative, à l'étape précédente, mise à disposition de ladite ébauche (5) directement munie du décor non débouchant (2a) ;
- Dépôt depuis la face intérieure (5b) d'une ou plusieurs couches d'émail (3) au sein du décor non débouchant (2a) et cuisson de l'émail (3) après chaque dépôt de couche ;
- Dépôt depuis la face intérieure (5b) d'une couche de matière luminescente (4) sur l'émail (3) ;
- Dépôt depuis la face intérieure (5b) d'une couche de protection (6) sur la couche de matière luminescente (4) ;
- Usinage, de préférence par meulage, de la face extérieure (5a) pour révéler l'émail (3) et ainsi réaliser l'article (1) avec le décor débouchant (2).

2. Procédé selon la revendication 1, comprenant, après l'étape d'usinage, une étape de polissage de la face extérieure (5a) pour apporter de la brillance au décor débouchant (2).

3. Procédé selon l'une des revendications précédentes, dans lequel ladite ébauche (5) est réalisé dans un matériau ayant un point de fusion supérieur ou égal à 650°C.

4. Procédé selon l'une des revendications précédentes, dans lequel le dépôt d'une ou plusieurs couches d'émail (3) est réalisé par sprayage liquide, au pinceau ou par saupoudrage d'une poudre.

5. Procédé selon l'une des revendications précédentes, dans lequel le nombre de couches d'émail (3) déposées est compris entre 2 et 15, de préférence entre 3 et 10.

6. Procédé selon l'une des revendications précédentes, dans lequel lors de l'étape de dépôt d'une ou plusieurs couches d'émail (3), des couches d'émail (3) de couleurs différentes sont déposées et/ou la couleur au sein d'une même couche est modulée.

7. Procédé selon l'une des revendications précédentes, comprenant une étape de texturation de l'émail (3) pour former une structure (7) en surface de l'émail (3) au niveau de la face extérieure (5a), au sein de l'émail (3) lors du dépôt de la ou des couches d'émail (3) et/ou en surface de l'émail (3) au niveau de la couche de matière luminescente (4).

8. Procédé selon la revendication précédente, comprenant une étape de remplissage de la structure (7) avec la matière luminescente (4).

9. Article (1) comprenant une face extérieure (5a) destinée à être tournée vers un observateur et une face intérieure (5b) opposée à la face extérieure (5a), ledit article (1) comprenant un décor débouchant (2) en émail plique-à-jour rétroéclairé.

10. Article (1) selon la revendication précédente, **caractérisé en ce que** le décor débouchant (2) comporte depuis la face extérieure (5a) une couche d'émail (3), une couche de matière luminescente (4) et une couche de protection (6).

11. Article (1) selon l'une des revendications 9 à 10, dans lequel la couche d'émail (3) a une épaisseur supérieure ou égale à 0.5 mm, de préférence supérieure ou égale à 0.8 mm.

12. Article (1) selon l'une des revendications 9 à 11, ledit article (1) étant un composant horloger d'habillage ou du mouvement.

13. Article (1) selon l'une des revendications 9 à 12, ledit article (1) étant un composant horloger d'habillage extérieur.

14. Article (1) selon l'une des revendications 9 à 13, ledit article (1) étant réalisé dans une céramique, un saphir ou un cermet.

15. Article (1) selon la revendication précédente, ledit article (1) étant réalisé dans de l'oxyde de zirconium.
